# EUROPEAN PATENT APPLICATION

(11) **EP 4 811 529 A1**
(43) Date of publication of application: **23.09.2026**
(21) Application number: 26162619.6
(22) Date of filing: 05.03.2026
(51) Int. Cl.: H01M 50/46, H01M 50/489, H01M 50/497

(54) **SEPARATOR, BATTERY, ENERGY STORAGE DEVICE, AND ELECTRIC EQUIPMENT COMPRISING THE SAME**

(30) Priority: 20.03.2025 CN 202510336118
(71) Applicant: Xiamen Hithium Energy Storage Technology Co., Ltd., Xiamen, Fujian 361100 (CN)
(72) Inventor: DAI, Shaowei, Xiamen, 361100 (CN); XIAO, Wenwu, Xiamen, 361100 (CN); HUANG, Zhiguo, Xiamen, 361100 (CN); ZHANG, Jun, Xiamen, 361100 (CN); HUANG, Wenqiang, Xiamen, 361100 (CN)
(74) Representative: RGTH

(57) **Abstract**

The present disclosure provides a separator, a battery, an energy storage device, and an electric equipment comprising the same. The separator comprises a substrate film and a dot-coated adhesive layer, wherein the dot-coated adhesive layer is disposed on at least one surface of the substrate film. The dot-coated adhesive layer comprises a plurality of adhesive dots distributed in a dot matrix, and the adhesive dots have a first annular structure. The distance between an outer edge of the first annular structure and a center of the adhesive dot is R₁, the distance between an inner edge of the first annular structure and the center of the adhesive dot is R₂, and 0.15≤1-R₂/R₁≤0.35. The dot-coated adhesive layer comprises a polymer binder and an auxiliary agent, and the auxiliary agent comprises at least one of a water-soluble coupling agent and a phosphate-based auxiliary agent.

## Description

### TECHNICAL FIELD

The present disclosure relates to the field of energy storage technology, and in particular, to a separator, a battery, an energy storage device, and an electric equipment comprising the same.

### BACKGROUND

Secondary batteries (e.g., lithium-ion batteries) usually consist of a positive electrode sheet, a separator, a negative electrode sheet, and an electrolyte, where the separator is located between the positive electrode sheet and the negative electrode sheet to separate the positive and negative electrodes and prevent short circuits caused by contact between the two electrodes.

PCS (Polymer Coating Separator) is a type of separator with a polymer coating added on the surface of a separator subtrate. It has the advantage of improving the adhesion between the separator and the positive and negative electrode sheets without significantly reducing the energy efficiency and rate performance of the battery.

However, current PCS separators based on dot matrix coating technology have high air permeability and large increase in ionic impedance, leading to easy wrinkling of the negative electrode interface of the battery and reduced energy efficiency.

### SUMMARY

To solve the above technical problems, the present disclosure discloses a separator, a battery, an energy storage device, and an electric equipment comprising the same, which improve the adhesion performance and air permeability of PCS separators based on dot matrix coating technology, thereby improving the wrinkling of the negative electrode sheet interface and energy efficiency of the battery.

In a first aspect, the present disclosure provides a separator. The separator comprises a substrate film and a dot-coated adhesive layer, and the dot-coated adhesive layer is disposed on at least one surface of the substrate film. The dot-coated adhesive layer comprises a plurality of adhesive dots distributed in a dot matrix, the adhesive dots have a first annular structure, a distance between an outer edge of the first annular structure and a center of the adhesive dot is R₁, a distance between an inner edge of the first annular structure and the center of the adhesive dot is R₂, and 0.15≤1-R₂/R₁≤0.35. The dot-coated adhesive layer comprises a polymer binder and an auxiliary agent, and the auxiliary agent comprises at least one of a water-soluble coupling agent and a phosphate-based auxiliary agent.

In some embodiments of the present disclosure, a thickness compression ratio of the separator is K, and 5%≤K≤15%.

In some embodiments of the present disclosure, an average height of the first annular structure is H, and 5 µm≤H≤15 µm.

In some embodiments of the present disclosure, an air permeability increase of the separator is A, and 5 s/100cc≤A≤20 s/100cc.

In some embodiments of the present disclosure, an ionic conductivity of the separator is σ, and 1 mS/cm≤σ≤1.7 mS/cm.

In some embodiments of the present disclosure, an adhesion strength between the separator and the positive electrode sheet ranges from 3 N/m to 8 N/m.

In some embodiments of the present disclosure, the separator satisfies at least one of the following characteristics:
a) a diameter of the adhesive dot is d, and 200 µm≤d≤800 µm;
b) along a length direction of the dot-coated adhesive layer, a distance between centers of adjacent adhesive dots is D₁, and 200 µm≤D₁≤1200 µm;
c) along a width direction of the dot-coated adhesive layer, a distance between centers of adjacent adhesive dots is D₂, and 200 µm≤D₂≤1200 µm;
d) a coverage rate of the dot-coated adhesive layer on the substrate film is C₁, and 5%≤C₁≤30%;
e) a single-sided areal density of the dot-coated adhesive layer ranges from 0.3 g/m² to 0.8 g/m².

In some embodiments of the present disclosure, in an adhesive layer solution for forming the dot-coated adhesive layer, a mass percentage content of the auxiliary agent is a, and 0.1 wt%≤a≤1 wt%.

In some embodiments of the present disclosure, the water-soluble coupling agent comprises at least one of polyvinyl alcohol, hydroxyethyl cellulose, fatty acid ester, carboxylic acid ester, lactate ester, and cellulose ester; the phosphate-based auxiliary agent comprises at least one of sodium tripolyphosphate, trisodium phosphate, sodium pyrophosphate, sodium phosphite, and sodium hexametaphosphate.

In a second aspect, the present disclosure provides a battery. The battery comprises a positive electrode sheet, a negative electrode sheet, an electrolyte, and a separator, and the separator is located between the positive electrode sheet and the negative electrode sheet. The separator is the separator according to the first aspect.

In some embodiments of the present disclosure, a surface of the positive electrode sheet has a second annular structure, the second annular structure is an annular imprint formed after the adhesive dot is peeled off from the surface of the positive electrode sheet, a distance between an outer edge of the second annular structure and a center of the annular imprint is R₃, a distance between an inner edge of the second annular structure and the center of the annular imprint is R₄, and 0.2≤1-R₄/R₃≤0.7.

In some embodiments of the present disclosure, an effective adhesion area coverage rate of the dot-coated adhesive layer on the positive electrode sheet is C₂, and 2%≤C₂≤20%.

In some embodiments of the present disclosure, 8 %≤( C2/C₁) × 100 %≤50 %.

In a third aspect, the present disclosure provides an energy storage device. The energy storage comprises a box body and at least one battery according to the second aspect, and the battery is accommodated in the box body.

In a fourth aspect, the present disclosure provides an electric equipment. The electric equipment comprises the energy storage device according to the third aspect, and the energy storage device supplies power to the electric equipment.

Compared with the prior art, the present disclosure has at least the following beneficial effects:
The present disclosure provides a separator, a battery, an energy storage device, and an electric equipment comprising the same. The separator comprises a substrate film and a dot-coated adhesive layer, the dot-coated adhesive layer comprises a plurality of adhesive dots distributed in a dot matrix, the adhesive dots have a first annular structure, a distance between an outer edge of the first annular structure and a center of the adhesive dot is R₁, a distance between an inner edge of the first annular structure and the center of the adhesive dot is R₂, and 0.15≤1-R₂/R₁≤0.35; the dot-coated adhesive layer comprises a polymer binder and an auxiliary agent, the auxiliary agent comprises at least one of a water-soluble coupling agent and a phosphate-based auxiliary agent, and the auxiliary agent is more conducive to forming the first annular structure of the present disclosure. In addition, by adjusting R₁ and R₂ of the first annular structure to satisfy the above relationship, the adhesion performance and air permeability of the separator can be balanced, the adhesion and ionic conductivity of the PCS separator based on dot matrix coating technology are improved, thereby improving the wrinkling of the negative electrode sheet interface and energy efficiency of the lithium-ion battery; in addition, the dot-coated adhesive layer of the present disclosure is formed based on dot matrix coating technology, which also improves the thickness uniformity of the separator.

### BRIEF DESCRIPTION OF THE DRAWINGS

To more clearly illustrate the technical solutions in the embodiments of the present disclosure, the following will briefly introduce the drawings needed in the embodiments. Obviously, the drawings in the following description are only some embodiments of the present disclosure. For those of ordinary skill in the art, other drawings can be obtained according to these drawings without creative work.
Fig. 1 is a schematic cross-sectional view of a separator according to an embodiment of the present disclosure;
Fig. 2 is a schematic structural view of a first annular structure according to an embodiment of the present disclosure;
Fig. 3 is a schematic structural view of a separator viewed along its thickness direction according to an embodiment of the present disclosure;
Fig. 4 is a schematic structural view of a second annular structure according to an embodiment of the present disclosure;
Fig. 5 is a schematic structural view of a residential energy storage system according to an embodiment of the present disclosure;
Fig. 6 is a schematic structural view of a commercial energy storage system according to an embodiment of the present disclosure;
Fig. 7 is a schematic diagram of sampling points for measuring the outer ring height of adhesive dots by a super-depth 3D microscope;
Fig. 8a is a schematic diagram of the coverage rate of a dot-coated separator in Example 4 measured by a super-depth 3D microscope;
Fig. 8b is a schematic diagram of the coverage rate of a dot-coated separator in Comparative Example 1 measured by a super-depth 3D microscope;
Fig. 9 is a scanning electron microscope (SEM) image of adhesive dots in Example 4;
Fig. 10 is an SEM image of annular imprints formed by adhesive dots on the surface of a positive electrode sheet in Example 4;
Fig. 11 is an SEM image of adhesive dots in Comparative Example 1;
Fig. 12 is an SEM image of annular imprints formed by adhesive dots on the surface of a positive electrode sheet in Comparative Example 1;
Fig. 13 is a photograph of a negative electrode sheet after full charging in Example 4;
Fig. 14 is a photograph of a negative electrode sheet after full charging in Comparative Example 1.

Explanation of reference numerals: 1: Energy storage device, 2: Power conversion device, 3: First user load, 4: Second user load, 10: Substrate film, 20: Dot-coated adhesive layer, 21: Adhesive dot, 211: First annular structure, 212: Second annular structure, 400: Commercial energy storage system, 410: High-voltage cable, 420: First power conversion device, 430: Second power conversion device.

### DETAILED DESCRIPTION

The technical solutions in the embodiments of the present disclosure will be clearly and completely described below with reference to the drawings in the embodiments of the present disclosure. Obviously, the described embodiments are only a part of the embodiments of the present disclosure, not all of them. Based on the embodiments in the present disclosure, all other embodiments obtained by those of ordinary skill in the art without creative work shall fall within the protection scope of the present disclosure.

In the present disclosure, terms such as "upper", "lower", "left", "right", "front", "rear", "top", "bottom", "inner", "outer", "vertical", "horizontal", "transverse", and "longitudinal" indicate orientations or positional relationships based on the orientations or positional relationships shown in the figures. These terms are mainly used to better describe the present disclosure and its embodiments, and are not used to limit that the indicated device, element, or component must have a specific orientation or be constructed and operated in a specific orientation.

In addition, some of the above terms may also be used to indicate other meanings besides orientation or positional relationship. For example, the term "upper" may also be used to indicate a certain attachment relationship or connection relationship in some cases. For those of ordinary skill in the art, the specific meanings of these terms in the present disclosure can be understood according to specific situations.

In addition, the terms "installed", "disposed", "provided with", "connected", and "connected" should be understood in a broad sense. For example, it may be a fixed connection, a detachable connection, or an integrated structure; it may be a mechanical connection or an electrical connection; it may be a direct connection, or an indirect connection through an intermediate medium, or an internal communication between two devices, elements, or components. For those of ordinary skill in the art, the specific meanings of the above terms in the present disclosure can be understood according to specific situations.

In addition, the terms "first" and "second" are mainly used to distinguish different devices, elements, or components (the specific types and structures may be the same or different), and are not used to indicate or imply the relative importance and quantity of the indicated devices, elements, or components. Unless otherwise specified, "plurality" means two or more.

It should be noted that in the content of the present disclosure, a lithium-ion battery is taken as an example of a secondary battery to explain the present disclosure, but the secondary battery of the present disclosure is not limited to the lithium-ion battery.

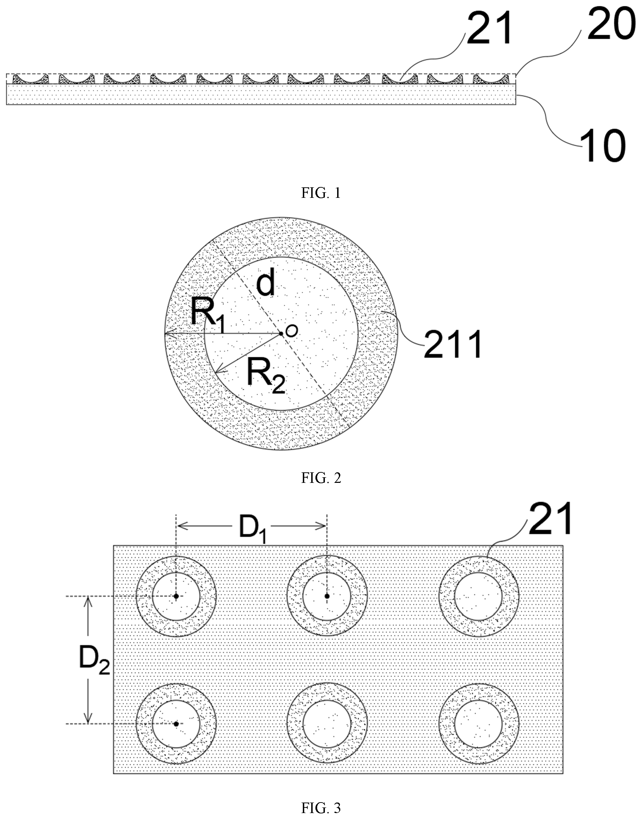

The present disclosure provides a separator. As shown in Fig. 1, the separator comprises a substrate film 10 and a dot-coated adhesive layer 20, and the dot-coated adhesive layer 20 is disposed on at least one surface of the substrate film 10. In one embodiment, the dot-coated adhesive layer 20 is disposed on one surface of the substrate film 10; in another embodiment, the dot-coated adhesive layer 20 is disposed on both surfaces of the substrate film 10. The dot-coated adhesive layer 20 comprises a plurality of adhesive dots 21 distributed in a dot matrix. Referring to Fig. 2, the adhesive dot 21 has a first annular structure 211, and the edge area of the adhesive dot is raised and the central area is depressed, thus forming a morphology with an annular structure. A distance between an outer edge of the first annular structure 211 and the center O of the adhesive dot is R₁, a distance between an inner edge of the first annular structure and the center of the adhesive dot is R₂, and R₁ and R₂ satisfy: 0.15≤1-R₂/R₁≤0.35. For example, 1-R₂/R₁ is 0.15, 0.2, 0.25, 0.3, or 0.35. In the present disclosure, 1-R₂/R₁ is defined as an average width ratio of the first annular structure.

The dot-coated adhesive layer of the present disclosure comprises at least one of a water-soluble coupling agent and a phosphate-based auxiliary agent. The auxiliary agent can increase the surface tension and viscosity of the adhesive layer solution used to form the adhesive dots, which is more conducive to forming the first annular structure of the present disclosure. Moreover, the inventors have found that when 1-R₂/R₁ is too small (e.g., less than 0.15), it indicates that the area ratio of the first annular structure in the adhesive dot is too small. Although the blocking effect on the pores of the positive electrode sheet is small, thereby having a smaller impact on the air permeability of the separator by the dot-coated adhesive layer, the effective adhesion area decreases, leading to a decrease in the adhesion performance of the separator. When 1-R₂/R₁ is too large (e.g., greater than 0.35), it indicates that the area ratio of the first annular structure in the adhesive dot is too large. Although the adhesion performance of the separator is improved, the increase in air permeability of the separator by the dot-coated adhesive layer is large, which tends to increase the ionic impedance of the separator. Based on this, by adjusting R₁ and R₂ of the first annular structure to satisfy the above relationship, the present disclosure balances the two performances of the separator, namely adhesion performance and air permeability, improves the adhesion and ionic conductivity of the PCS separator based on dot matrix coating technology, thereby improving the wrinkling of the negative electrode sheet interface and energy efficiency of the lithium-ion battery. In addition, the dot-coated adhesive layer of the present disclosure is formed based on dot matrix coating technology, which also improves the thickness uniformity of the separator.

In an optional embodiment, a thickness compression ratio of the separator is K, and 5%≤K≤15%. For example, K is 5%, 8%, 10%, 12%, or 15%. When K is too small (e.g., less than 5%), the adhesion area between the adhesive dots in the dot-coated adhesive layer and the positive electrode sheet is small, leading to low adhesion strength. When K is too large (e.g., greater than 15%), the adhesion area between the adhesive dots in the dot-coated adhesive layer and the positive electrode sheet is larger. Although the adhesion strength between the separator and the positive electrode sheet is improved, the adhesive material in the central area of the adhesive dots will be largely transferred and covered on the positive electrode sheet in contact with the adhesive dots, affecting the air permeability and lithium-ion transmission effect in this area between the positive electrode sheets, which is likely to cause excessive local impedance and uneven current density, and affect the electrochemical performance of the lithium-ion battery. By adjusting K within the above range, the electrochemical performance of the lithium-ion battery can be improved on the basis of meeting the adhesion strength between the separator and the positive electrode sheet.

In an optional embodiment, an average height of the first annular structure is H, and 5 µm≤H≤15 µm. For example, H is 5 µm, 8 µm, 10 µm, 12 µm, or 15 µm. When H is too small (e.g., less than 5 µm), a very large pressure (e.g., greater than 9 MPa) is required to achieve a good adhesion effect between the separator and the positive electrode sheet. Such a large pressure is likely to damage the internal pore structures of the positive electrode sheet and the separator, and even cause the collapse of some pore structures. When H is too large (e.g., greater than 15 µm), on the one hand, the height of the first annular structure requires a larger adhesive dot diameter d to support, which tends to make 1-R₂/R₁ too large, that is, the area coverage rate of the first annular structure is too large, leading to an increase in the difficulty of the dot coating process, and thus the existing dot coating process is difficult to achieve such a high height. On the other hand, it will also affect the thickness uniformity of the separator. By adjusting H within the above range, a good adhesion effect can be obtained with a moderate pressure, and the impact on the air permeability increase and ionic impedance of the separator is small.

In an optional embodiment, an air permeability increase of the separator is A, and 5 s/100cc≤A≤20 s/100cc. For example, A is 5 s/100cc, 10 s/100cc, 15 s/100cc, or 20 s/100cc. The air permeability increase of the separator within the above range indicates that the dot-coated adhesive layer has a small impact on the air permeability of the separator, which is beneficial to the improvement of the energy efficiency of the lithium-ion battery and has better low-temperature cycle performance.

In an optional embodiment, an ionic conductivity of the separator is σ, and 1 mS/cm≤σ≤1.7 mS/cm. For example, σ is 1 mS/cm, 1.3 mS/cm, 1.5 mS/cm, or 1.7 mS/cm. The ionic conductivity of the separator within the above range indicates that the separator has small ionic impedance and little impact on the energy efficiency of the lithium-ion battery.

In an optional embodiment, an adhesion strength between the separator and the positive electrode sheet ranges from 3 N/m to 8 N/m. For example, the adhesion strength between the separator and the positive electrode sheet is 3 N/m, 4 N/m, 5 N/m, 6 N/m, 7 N/m, or 8 N/m. The adhesion strength between the separator and the positive electrode sheet within the above range indicates that the separator and the electrode sheet in the bare cell (i.e., the battery not yet injected with electrolyte) can resist local bulging and deformation caused by the electrolyte infiltrating the separator and the electrode sheet during the liquid injection process; in addition, it can also alleviate the wrinkling phenomenon of the negative electrode sheet caused by repeated expansion due to lithium intercalation and deintercalation during the cyclic charge and discharge process of the lithium-ion battery.

In an optional embodiment, as shown in Fig. 2, a diameter of the adhesive dot is d, and 200 µm≤d≤800 µm. For example, d is 200 µm, 400 µm, 600 µm, or 800 µm. By adjusting the diameter of the adhesive dot within the above range, it is conducive to forming an adhesive dot with a first annular structure having a raised edge area and a depressed central area, and the increase in the air permeability of the separator is small, thereby reducing the impact on the ionic impedance of the separator while improving the adhesion of the separator.

In an optional embodiment, as shown in Fig. 3, along a length direction (MD) of the dot-coated adhesive layer, a distance between centers of adjacent adhesive dots is D₁, and 200 µm≤D₁≤1200 µm. For example, D₁ is 200 µm, 400 µm, 800 µm, or 1200 µm. By adjusting the distance between centers of adjacent adhesive dots within the above range, the coverage rate C₁ of the dot-coated adhesive layer on the substrate film is within an appropriate range, and it is conducive to leaving sufficient adhesive-free areas between the coated adhesive dots, reducing the impact on the air permeability of the separator.

In an optional embodiment, as shown in Fig. 3, along a width direction (TD) of the dot-coated adhesive layer, a distance between centers of adjacent adhesive dots is D₂, and 200 µm≤D₂≤1200 µm. For example, D₂ is 200 µm, 400 µm, 800 µm, or 1200 µm. By adjusting the distance between centers of adjacent adhesive dots within the above range, the coverage rate C₁ of the dot-coated adhesive layer on the substrate film is within an appropriate range, and it is conducive to leaving sufficient adhesive-free areas between the coated adhesive dots, reducing the impact on the air permeability of the separator.

In an optional embodiment, a coverage rate of the dot-coated adhesive layer on the substrate film is C₁, and 5%≤C₁≤30%. For example, C₁ is 5%, 10%, 15%, 20%, 25%, or 30%. By adjusting the coverage rate of the dot-coated adhesive layer on the substrate film within the above range, the separator and the positive electrode sheet have a high adhesion area, and the increase in the air permeability of the separator by the dot-coated adhesive layer is small, and the impact on the ionic impedance of the separator is small.

In an optional embodiment, a single-sided areal density of the dot-coated adhesive layer ranges from 0.3 g/m² to 0.8 g/m². For example, the single-sided areal density of the dot-coated adhesive layer is 0.3 g/m², 0.5 g/m², 0.7 g/m², or 0.8 g/m². By adjusting the single-sided areal density of the dot-coated adhesive layer within the above range, the ionic conductivity of the separator is not significantly reduced, and it is conducive to a good adhesion effect between the dot-coated adhesive layer and the positive electrode sheet, and alleviates the wrinkling phenomenon of the negative electrode sheet interface during the cycle of the lithium-ion battery.

In an optional embodiment, in the adhesive layer solution for forming the dot-coated adhesive layer, the mass percentage content of the auxiliary agent is a, and 0.1 wt%≤a≤1 wt%. For example, a is 0.1 wt%, 0.2 wt%, 0.4 wt%, 0.6 wt%, 0.8 wt%, 0.9 wt%, or 1 wt%. By adjusting the content of the auxiliary agent within the above range, the surface tension and viscosity of the adhesive layer solution used to form the dot-coated adhesive layer can be effectively increased, thereby being more conducive to forming the first annular structure with a depressed central area and a raised edge area.

In an optional embodiment, the water-soluble coupling agent comprises at least one of polyvinyl alcohol, hydroxyethyl cellulose, fatty acid ester, carboxylic acid ester, lactate ester, and cellulose ester. The phosphate-based auxiliary agent comprises at least one of sodium tripolyphosphate, trisodium phosphate, sodium pyrophosphate, sodium phosphite, and sodium hexametaphosphate.

The present disclosure has no special limitation on the polymer binder as long as the purpose of the present disclosure can be achieved. For example, the polymer binder comprises but is not limited to at least one of acrylate polymer, vinylidene fluoride polymer, and polyacrylic acid. The acrylate polymer and vinylidene fluoride polymer are granular solids, and polyacrylic acid is a liquid. The acrylate polymer can be selected from at least one of polymethyl acrylate, polymethyl methacrylate, polyethyl acrylate, polyacrylate, and polybutyl acrylate. The vinylidene fluoride polymer can be a crosslinked polymer selected from homopolymers only comprising structural units derived from vinylidene fluoride monomers and copolymers comprising structural units derived from vinylidene fluoride and structural units derived from other monomers. The copolymer can comprise at least one of structural units derived from chlorotrifluoroethylene, trifluoroethylene, hexafluoropropylene, tetrafluoroethylene, and ethylene monomers, and structural units derived from vinylidene fluoride, but is not limited thereto. For example, the copolymer can be a polyvinylidene fluoride-hexafluoropropylene (PVDF-HFP) copolymer comprising structural units derived from vinylidene fluoride monomers and structural units derived from hexafluoropropylene monomers.

The polymer binder can be in the form of granular solid binder particles with a Dv50 of 3 µm to 15 µm. This facilitates improving the dispersion uniformity of the polymer binder in the adhesive layer solution and makes it easier to control the thickness uniformity of the adhesive layer.

In the present disclosure, Dv50 represents the particle size value corresponding to the cumulative volume distribution percentage reaching 50% when measured from the small particle size in the volume-based particle size distribution.

The present disclosure has no special limitation on the preparation method of the separator. Exemplarily, it can be prepared according to the following steps:
Step A: Mixing the binder and the auxiliary agent to prepare an adhesive layer solution;
Step B: Applying the adhesive layer solution onto at least one surface of the substrate film through a dot matrix coating process, and drying it to form a separator based on the dot coating process.

In Step A, during the preparation of the adhesive layer solution, the temperature is controlled at 25°C to 50°C, and the pH is controlled at 5 to 9, which is conducive to the sufficient dissolution of the binder and the auxiliary agent, improving the dispersion effect, and prolonging the sedimentation time of the adhesive layer solution. The viscosity of the adhesive layer solution ranges from 200 mPa.s to 600 mPa.s, the solid content ranges from 10% to 18%, and the surface tension ranges from 90 mN/m to 150 mN/m. The adhesive layer solution meeting the above parameters of viscosity, solid content, and surface tension is more suitable for the dot matrix coating process.

In Step B, in one embodiment, the adhesive layer solution is dot-coated onto the surface of the substrate film facing the positive electrode sheet. In another embodiment, the adhesive layer solution is dot-coated onto both surfaces of the substrate film. In another embodiment, the adhesive layer solution is dot-coated onto the surface of the substrate film facing the negative electrode sheet.

The present disclosure has no special limitation on the dot matrix coating process, for example, it can comprise contact-type plate roller dot coating, non-contact-type jet dot coating, and the like.

In the present disclosure, the formation mechanism of the first annular structure is: after the adhesive layer solution forms droplet-shaped adhesive dots through the dot coating process, the evaporation rate of the droplet edge is higher than that of the center, resulting in an outward capillary flow inside the droplet, which carries the suspended solid particles to the droplet edge, and deposits to form a ring after drying. At the initial stage of drying, the contraction of the droplets is hindered by resistances arising from various factors. These comprise the porous structure on the separator surface, the liquid phase of the droplets, and the additional frictional drag caused by differences in the chemical composition of the solid particles. The height of the droplet center is greater than that of the edge. When the water at the droplet edge evaporates, part of the water molecules flow from the droplet center to the droplet edge, and the droplet volume continuously decreases, but the diameter of the droplet remains approximately unchanged. Therefore, the solid binder particles (e.g., PVDF-HFP solid particles) or other liquid glue phases in the droplet will continuously flow from the droplet center to the edge along with the aqueous phase. Moreover, since surface tension is also a force that reduces the surface area of the liquid, during the drying process, the glue binder with high surface tension will carry the solid binder particles to accelerate the movement to the edge, resulting in more and more solid particles precipitated at the droplet edge, and fewer and fewer solid binder particles left in the center. When the adhesive dot is completely dried, most of the solid binder particles remain at the droplet edge, naturally forming a ring structure.

The present disclosure also provides a battery, comprising a positive electrode sheet, a negative electrode sheet, an electrolyte, and a separator. The separator is located between the positive electrode sheet and the negative electrode sheet, and the separator is the separator according to any of the above embodiments.

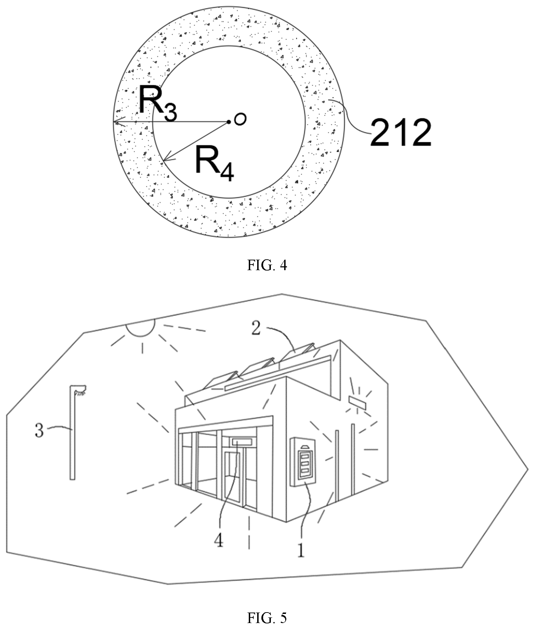

In an optional embodiment, referring to Fig. 4, the surface of the positive electrode sheet has a second annular structure 212, a distance between an outer edge of the second annular structure and its center O is R₃, a distance between an inner edge of the second annular structure and its center O is R₄, and 0.2≤1-R₄/R₃≤0.7. For example, 1-R₄/R₃ is 0.2, 0.4, 0.5, 0.6, or 0.7. The second annular structure is an annular imprint formed after the adhesive dot is peeled off from the surface of the positive electrode sheet, and the annular imprint is the adhesive dot residue after the adhesive dot is peeled off from the positive electrode sheet. By adjusting 1-R₄/R₃ within the above range, it indicates that the separator adhesive dot and the positive electrode sheet have an appropriate adhesion effect, and the coverage of the adhesive layer on the surface of the positive electrode sheet does not significantly affect the intercalation and migration of lithium ions, so that the separator and the positive electrode sheet in the lithium-ion battery have good interface contact, and the energy efficiency and cycle performance of the lithium-ion battery are improved.

In an optional embodiment, an effective adhesion area coverage rate of the dot-coated adhesive layer on the positive electrode sheet is C₂, and 3%≤C₂≤20%. For example, C₂ is 3%, 10%, 15%, or 20%. By adjusting the effective adhesion area coverage rate of the dot-coated adhesive layer on the positive electrode sheet within the above range, it indicates that the separator dot-coated adhesive layer and the positive electrode sheet have an appropriate adhesion effect, and the intercalation and migration of lithium ions are not significantly affected.

In an optional embodiment, 20% ≤ (C₂/C₁) × 100%≤ 50%. For example, (C₂/C₁) × 100% is 20%, 30%, 40%, or 50%. By adjusting (C₂/C₁) × 100% within the above range, it indicates that the dot-coated adhesive layer has an appropriate transfer rate on the surface of the positive electrode sheet, so that the separator and the surface of the positive electrode sheet have a good adhesion effect.

The present disclosure has no special limitation on the positive electrode sheet as long as the purpose of the present disclosure can be achieved. For example, the positive electrode sheet usually comprises a positive electrode current collector and a positive electrode material layer. The positive electrode material layer can be disposed on one surface of the positive electrode current collector in the thickness direction, or on both surfaces of the positive electrode current collector in the thickness direction. In the present disclosure, the positive electrode material layer is disposed on the surface of the positive electrode current collector, that is, the positive electrode material layer can be disposed on a partial area of one surface of the positive electrode current collector, or on the entire area of one surface of the positive electrode current collector. In the present disclosure, the positive electrode current collector is not particularly limited as long as the purpose of the present disclosure can be achieved. For example, it can comprise but is not limited to aluminum foil, aluminum alloy foil, or composite current collector. In the present disclosure, the thickness of the positive electrode current collector is not particularly limited as long as the purpose of the present disclosure can be achieved. For example, the thickness ranges from 5 µm to 13 µm. The single-sided thickness of the positive electrode material layer of the present disclosure can range from 75 µm to 120 µm.

In the present disclosure, the positive electrode active material layer comprises a positive electrode active material. The present disclosure has no special limitation on the positive electrode active material as long as the purpose of the present disclosure can be achieved. For example, it can comprise at least one of lithium iron phosphate, lithium-rich manganese-based material, lithium cobalt oxide, lithium manganese oxide, and lithium manganese iron phosphate.

In the present disclosure, the positive electrode active material layer can also comprise a positive electrode binder. The present disclosure has no special limitation on the positive electrode binder as long as the purpose of the present disclosure can be achieved. For example, it can comprise but is not limited to at least one of fluorine-containing resin, polypropylene resin, fiber-type binder, rubber-type binder, or polyimide-type binder.

The lithium-ion battery of the present disclosure also comprises a negative electrode sheet. The present disclosure has no special limitation on the negative electrode sheet as long as the purpose of the present disclosure can be achieved. For example, the negative electrode sheet usually comprises a negative electrode current collector and a negative electrode material layer. The negative electrode material layer can be disposed on one surface or both surfaces of the negative electrode current collector in the thickness direction. In the present disclosure, the negative electrode material layer is disposed on the surface of the negative electrode current collector, that is, the negative electrode material layer can be disposed on a partial area of one surface of the negative electrode current collector, or on the entire area of one surface of the negative electrode current collector. The present disclosure has no special limitation on the negative electrode current collector as long as the purpose of the present disclosure can be achieved. For example, it can comprise but is not limited to copper foil, copper alloy foil, nickel foil, or composite current collector. In the present disclosure, the thickness of the negative electrode current collector is not particularly limited as long as the purpose of the present disclosure can be achieved. For example, the thickness ranges from 4 µm to 12 µm. The single-sided thickness of the negative electrode material layer of the present disclosure can range from 50 µm to 80 µm.

In the present disclosure, the negative electrode material layer comprises a negative electrode material. The negative electrode material is not particularly limited as long as the purpose of the present disclosure can be achieved. For example, it can comprise at least one of artificial graphite, natural graphite, mesocarbon microbeads, soft carbon, hard carbon, silicon, and silicon-carbon.

In the present disclosure, the negative electrode material layer can also comprise a negative electrode binder. The present disclosure has no special limitation on the negative electrode binder as long as the purpose of the present disclosure can be achieved. For example, it can comprise at least one of acrylate, polyamide, polyimide, polyamideimide, polyvinylidene fluoride, styrene-butadiene rubber, sodium alginate, polyvinyl alcohol, polytetrafluoroethylene, polyacrylonitrile, sodium carboxymethylcellulose, and potassium carboxymethylcellulose.

The present disclosure has no special limitation on the substrate film of the separator. Those skilled in the art can select it according to actual needs as long as the purpose of the present disclosure can be achieved. For example, the substrate film is a non-woven fabric, film, or composite film with a porous structure, and the material of the substrate film is selected from at least one of polyethylene, polypropylene, polyethylene terephthalate, and polyimide. Specifically, a polypropylene porous film, a polyethylene porous film, a polypropylene non-woven fabric, a polyethylene non-woven fabric, or a polypropylene-polyethylene-polypropylene porous composite film can be selected.

The battery of the present disclosure also comprises an electrolyte. The present disclosure has no special limitation on the electrolyte. Those skilled in the art can select it according to actual needs as long as the purpose of the present disclosure can be achieved. For example, after mixing at least one of ethylene carbonate (EC), propylene carbonate (PC), diethyl carbonate (DEC), ethyl propionate (EP), propyl propionate (PP), ethyl methyl carbonate (EMC), dimethyl carbonate (DMC), vinylene carbonate (VC), or fluoroethylene carbonate (FEC) in a certain mass ratio or volume ratio to obtain a non-aqueous organic solvent, adding a lithium salt to dissolve and mixing uniformly to obtain the electrolyte. The present disclosure has no limitation on the type of lithium salt as long as the purpose of the present disclosure can be achieved. For example, the lithium salt can comprise at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO2CF3)3, LiSiF₆, lithium bis(oxalato)borate (LiBOB), or lithium difluoroborate.

The present disclosure has no special limitation on the concentration of the lithium salt in the electrolyte as long as the purpose of the present disclosure can be achieved. Taking LiPF₆ as an example, the concentration of LiPF₆ in the electrolyte ranges from 5 wt% to 25 wt%. For example, the concentration of LiPF₆ is 5 wt%, 10 wt%, 11 wt%, 12 wt%, 12.5 wt%, 15 wt%, 20 wt%, or 25 wt%.

The battery of the present disclosure also comprises a case. The present disclosure has no special limitation on the case. Those skilled in the art can select it according to actual needs as long as the purpose of the present disclosure can be achieved. For example, the case can comprise an aluminum-plastic film.

The present disclosure has no special limitation on the preparation method of the battery. A preparation method known in the art can be selected as long as the purpose of the present disclosure can be achieved. For example, the preparation method of the battery comprises but is not limited to the following steps: stacking the positive electrode sheet, the separator, and the negative electrode sheet in sequence, winding, laminating, and the like as needed to obtain a bare cell, placing the bare cell into an aluminum alloy prismatic case, and performing vacuum baking, liquid injection, formation, and other processes to obtain a lithium-ion battery.

The present disclosure also provides an energy storage device. The storage device comprises a box body and at least one battery according to any of the above embodiments, and the battery is accommodated in the box body. The energy storage device with the battery has excellent performance, which is conducive to the use of the energy storage device. Accommodating the battery in the box body can increase the fixation and protection of the battery and improve the service life of the energy storage device. It can be understood that the energy storage device can have one or more batteries. When the energy storage device contains multiple batteries, the multiple batteries can be connected through at least one of parallel connection and series connection.

The present disclosure also provides an electric equipment. The electric equipment comprises the energy storage device according to the above embodiment, which is conducive to improving the product competitiveness and use performance of the electric equipment. In an optional embodiment, the electric equipment comprises an electric equipment body, and the energy storage device is used to supply power to the electric equipment body. In an optional embodiment, the electric equipment body comprises an equipment positive electrode and an equipment negative electrode. The positive electrode sheet of the battery in the energy storage device is used to be electrically connected to the equipment positive electrode of the electric equipment body, and the negative electrode sheet of the battery in the energy storage device is used to be electrically connected to the equipment negative electrode of the electric equipment body to supply power to the electric equipment.

The electric equipment of the present disclosure can comprise but is not limited to: containers, residential energy storage systems, electric bikes, electric vehicles, ships, spacecraft, electric toys, electric tools, and the like. The spacecraft is, for example, airplanes, rockets, space shuttles, spacecraft, and the like. The electric toys comprise, for example, fixed or mobile electric toys, specifically, electric vehicle toys, electric ship toys, electric airplane toys, and the like. The electric tools comprise, for example, metal cutting electric tools, grinding electric tools, assembly electric tools, and railway electric tools, specifically, electric drills, electric grinders, electric wrenches, electric screwdrivers, electric hammers, impact drills, concrete vibrators, electric planers, and the like.

Please refer to Fig. 5. Fig. 5 is a schematic structural view of a residential energy storage system according to an embodiment of the present disclosure, and the embodiment of Fig. 5 of the present disclosure is described by taking a household energy storage scenario in user-side energy storage as an example. The energy storage device of the present disclosure is not limited to the household energy storage scenario.

The present disclosure provides a residential energy storage system. The residential energy storage system comprises a power conversion device 2 (solar panel), a first user load 3 (street lamp), a second user load 4 (e.g., household appliances such as air conditioners), and an energy storage device 1. The energy storage device 1 is a small energy storage box, which can be installed on an outdoor wall in a wall-mounted manner. Specifically, the solar panel can convert solar energy into electrical energy during the off-peak electricity price period. The energy storage device 1 is used to store the electrical energy and supply it to the street lamp and household appliances during the peak electricity price period, or supply power when the power grid is cut off/powered off.

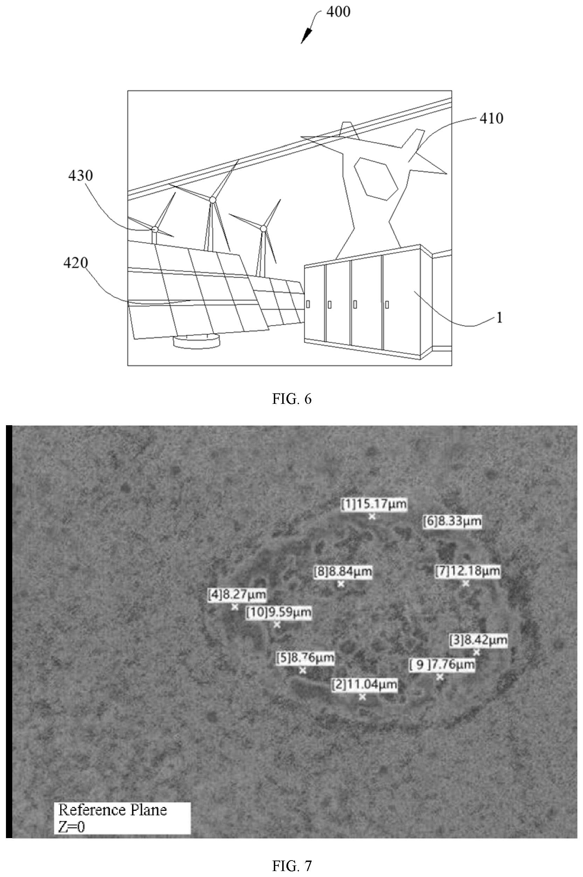

Please refer to Fig. 6. Fig. 6 is a schematic structural view of a commercial energy storage system 400 according to an embodiment of the present disclosure, and the embodiment of Fig. 6 of the present disclosure is described by taking a shared energy storage scenario on the power generation/distribution side as an example. The energy storage device 1 of the present disclosure is not limited to the power generation/distribution side energy storage scenario.

The present disclosure provides a commercial energy storage system 400. The commercial energy storage system 400 comprises: a high-voltage cable 410, a first power conversion device 420, a second power conversion device 430, and the energy storage device 1 provided by the present disclosure. In the case of power generation, the first power conversion device 420 and the second power conversion device 430 are used to convert other forms of energy into electrical energy, which is connected to the high-voltage cable 410 and supplied to the distribution network user side. When the user load is low and the power generation of the first power conversion device 420 and the second power conversion device 430 is excessive, the excess power is stored in the energy storage device 1, which reduces the wind and light curtailment rate and improves the consumption of new energy power generation; when the user load is high, the power grid issues an instruction to transmit the electrical energy stored in the energy storage device 1 to the user side in a grid-connected mode in coordination with the high-voltage cable 410, providing various services such as peak shaving, frequency modulation, and standby for the operation of the power grid, giving full play to the peak shaving role of the power grid, promoting peak load shifting of the power grid, and alleviating the power supply pressure of the power grid.

Optionally, the first power conversion device 420 and the second power conversion device 430 can convert at least one of solar energy, light energy, wind energy, thermal energy, tidal energy, biomass energy, and mechanical energy into electrical energy.

The number of energy storage devices 1 can be multiple. The multiple energy storage devices 1 are connected in series or parallel with each other, and the multiple energy storage devices 1 are supported and electrically connected by a separator (not shown). In this embodiment, "multiple" means two or more. An energy storage box can also be provided outside the energy storage device 1 to accommodate the energy storage device 1.

Optionally, the energy storage device 1 can comprise but is not limited to a battery module, a battery pack, a battery system, and the like. The battery module can be a battery module formed by connecting multiple batteries of the present disclosure in series/parallel, the battery pack can comprise multiple batteries of the present disclosure, and the battery system can be a charge-discharge system comprising the battery or battery pack of the present disclosure.

The actual application form of the energy storage device 1 provided by the embodiment of the present disclosure can be but not limited to the listed products, and can also be other application forms. The embodiment of the present disclosure does not strictly limit the application form of the energy storage device 1. The embodiment of the present disclosure only describes the energy storage device 1 as a multi-cell battery. When the energy storage device 1 comprises a single battery, the single battery can be at least one of a cylindrical battery and a prismatic battery.

### Examples

Hereinafter, preparation examples, examples, and comparative examples are given to more specifically illustrate the embodiments of the present disclosure. Various tests and evaluations are carried out according to the following methods.

### Example 1

### <Preparation of Separator>

### <Preparation of Adhesive Layer Solution>

PVDF-HFP powder (Dv50 is 7 µm), polyacrylic acid (PAA), methyl acrylate emulsion, and an auxiliary agent sodium tripolyphosphate were weighed according to a mass ratio of 72.7:5:22:0.3. First, deionized water was added as a solvent to a stirrer, then the weighed PAA was added, stirred uniformly at 1000 rpm/15 min, then sodium tripolyphosphate was added, stirred uniformly at 1000 rpm/15 min, the temperature was controlled at about 40°C, and the pH was controlled at about 7. Then PVDF-HFP powder was added, stirred uniformly at 2500 rpm/90 min, then methyl acrylate emulsion was added, stirred uniformly at 1000 rpm/15 min, then slowly stirred at 500 rpm/15 min to eliminate bubbles, and an adhesive layer solution was obtained.

### <Preparation of Dot-Coated Adhesive Layer>

The adhesive layer solution was dot-coated onto both surfaces of a substrate film by a plate roller dot coating device. The substrate film was a substrate film with a ceramic coating on the surface, the thickness of the ceramic coating was 2 µm, and the substrate film was a polyethylene (PE) porous film with a thickness of 7 µm. After drying at 65°C, a separator with a dot-coated adhesive layer was obtained, which was slitted for later use. The single-sided areal density of the dot-coated adhesive layer was 0.5 g/m², the diameter (d) of a single adhesive dot was about 452 µm, the distance (D₁) between centers of adjacent adhesive dots in the MD direction was 675 µm, the distance (D₂) between centers of adjacent adhesive dots in the TD direction was 800 µm, the coverage rate of the dot-coated adhesive layer was 29.70%, and the running speed of the separator was 100 m/min.

### <Preparation of Positive Electrode Sheet>

Positive electrode active material lithium iron phosphate (LiFePO₄), conductive carbon black (Super-P), and binder PVDF were mixed according to a mass ratio of 97:1:2. N-methylpyrrolidone (NMP) was added as a solvent, stirred uniformly to prepare a positive electrode slurry with a solid content of 60 wt%, then the positive electrode slurry was uniformly coated on one surface of a positive electrode current collector aluminum foil with a thickness of 11 µm, dried at 85°C. The above steps were repeated on the other surface of the positive electrode sheet, and a positive electrode sheet with a positive electrode material layer coated on both sides was obtained after calendering. The single-sided thickness of the positive electrode material layer was 90 µm.

### <Preparation of Negative Electrode Sheet>

Negative electrode material artificial graphite, conductive carbon black (Super-P), sodium carboxymethylcellulose (CMC-Na), and styrene-butadiene rubber (SBR) were mixed according to a mass ratio of 97:1:1.5:0.5, deionized water was added, stirred uniformly to prepare a negative electrode slurry with a solid content of 55 wt%. Then the negative electrode slurry was uniformly coated on one surface of a negative electrode current collector copper foil with a thickness of 6 µm, dried at 105°C. The above steps were repeated on the other surface of the negative electrode sheet, and a negative electrode sheet with a negative electrode material layer coated on both sides was obtained after calendering. The single-sided thickness of the negative electrode material layer was 70 µm.

### <Preparation of Electrolyte>

Ethylene carbonate (EC), diethyl carbonate (DEC), and dimethyl carbonate (DMC) were mixed according to a volume ratio of 1:1:1, dissolved and fully stirred, then placed in an environment of ≤5°C for 12 h, then lithium hexafluorophosphate (LiPF₆) was added, and mixed uniformly to obtain an electrolyte. The molar concentration of LiPF₆ in the electrolyte was 1.0 mol/L.

### <Preparation of Lithium-Ion Battery>

The above-prepared positive electrode sheet, separator, and negative electrode sheet were stacked in sequence, so that the separator was between the positive electrode and the negative electrode to play an isolation role, and wound to obtain a bare cell. The bare cell was placed in an aluminum alloy prismatic case, vacuum-dried, injected with electrolyte, and subjected to vacuum packaging, standing, formation, and other processes to obtain a lithium-ion battery.

### Example 2~Example 4

Except that in <Preparation of Adhesive Layer Solution>, the addition amount of the auxiliary agent was adjusted according to Table 1, the rest were the same as Example 1.

### Example 5~Example 8

Except that in <Preparation of Adhesive Layer Solution>, the type of the auxiliary agent was adjusted according to Table 5, the rest were the same as Example 2.

### Comparative Example 1

Except that in <Preparation of Adhesive Layer Solution>, the auxiliary agent sodium tripolyphosphate was not added, the rest were the same as Example 1.

### Comparative Example 2~Comparative Example 3

Except that in <Preparation of Adhesive Layer Solution>, the addition amount of the auxiliary agent sodium tripolyphosphate was adjusted to change 1-R₂/R₁, the rest were the same as Example 1.

**Table 1: Preparation Parameters of Example 1~Example 4 and Comparative Example 1~Comparative Example 3**

| | Addition Amount of Auxiliary Agent (wt%) | Viscosity of Adhesive Layer Solution (mPa·s) | Surface Tension of Adhesive Layer Solution (mN/m) |
|---|---|---|---|
| Example 1 | 0.3 | 200 | 90.4 |
| Example 2 | 0.5 | 250 | 100.2 |
| Example 3 | 0.7 | 300 | 120.3 |
| Example 4 | 1.0 | 600 | 148.9 |
| Comparative Example 1 | 0.0 | 150 | 58.3 |
| Comparative Example 2 | 0.05 | 170 | 66.3 |
| Comparative Example 3 | 2.0 | 920 | 188.9 |

**Table 2: Separator-Related Parameters of Example 1~Example 4 and Comparative Example 1~Comparative Example 3**

| | Single-Si ded Areal density (g/m²) | Thickness Uniformity (µm) | Adhesive Dot Diameter d (µm) | Distance D₁ between Centers of Adjacent Adhesive Dots in MD Length Direction (µm) | Distance D₂ between Centers of Adjacent Adhesive Dots in TD Width Direction (µm) | Thickness Compression Ratio K (%) | Air Permeability Increase A (s/100cc) |
|---|---|---|---|---|---|---|---|
| Example 1 | 0.50 | 0.63 | 452 | 675 | 800 | 7.7 | 7 |
| Example 2 | 0.50 | 0.68 | 444 | 675 | 800 | 9.8 | 8 |
| Example 3 | 0.50 | 0.75 | 438 | 675 | 800 | 12.3 | 9 |
| Example 4 | 0.50 | 0.73 | 430 | 675 | 800 | 14.3 | 11 |
| Comparative Example 1 | 0.50 | 0.70 | 480 | 675 | 800 | 3.2 | 30 |
| Comparative Example 2 | 0.50 | 0.61 | 454 | 675 | 800 | 5.2 | 5 |
| Comparative Example 3 | 0.50 | 0.75 | 400 | 675 | 800 | 17.1 | 15 |

**Table 3: Parameters Related to First Annular Structure and Second Annular Structure of Example 1~Example 4 and Comparative Example 1~Comparative Example 3**

| | First Annular Structure | | Second Annular Structure |
|---|---|---|---|
| | 1-R₂/R₁ | Average Height H (µm) | 1-R₄/R₃ |
| Example 1 | 0.15 | 5.8 | 0.22 |
| Example 2 | 0.24 | 8.4 | 0.35 |
| Example 3 | 0.30 | 11.4 | 0.57 |
| Example 4 | 0.34 | 14.8 | 0.69 |
| Comparative Example 1 | / | / | / |
| Comparative Example 2 | 0.06 | 4.6 | 0.15 |
| Comparative Example 3 | 0.45 | 15.3 | 0.82 |

In Table 3, "/" indicates that there are no relevant parameters.

**Table 4: Adhesive Dot Coverage of Example 1~Example 4 and Comparative Example 1~Comparative Example 3**

| | Coverage Rate C₁ of Dot-Coated Adhesive Layer on Substrate film (%) | Effective Adhesion Area Coverage Rate C₂ of Dot-Coated Adhesive Layer on Positive Electrode Sheet (%) | (C₂/C₁) × 100% |
|---|---|---|---|
| Example 1 | 29.70 | 2.53 | 8.52 |
| Example 2 | 26.66 | 3.54 | 13.28 |
| Example 3 | 24.89 | 6.75 | 27.12 |
| Example 4 | 21.88 | 10.7 | 48.90 |
| Comparative Example 1 | 33.49 | 1.13 | 3.37 |
| Comparative Example 2 | 29.86 | 1.55 | 5.19 |
| Comparative Example 3 | 17.26 | 12.20 | 70.68 |

**Table 5: Preparation Parameters of Example 2 and Example 5~Example 8**

| | Type of Auxiliary Agent | Addition Amount of Auxiliary Agent (wt%) |
|---|---|---|
| Example 2 | Sodium Tripolyphosphate | 0.5 |
| Example 5 | Polyvinyl Alcohol | 0.5 |
| Example 6 | Hydroxyethyl Cellulose | 0.5 |
| Example 7 | Sodium Tripolyphosphate + Polyvinyl Alcohol | 0.2 + 0.3 |
| Example 8 | Polyvinyl Alcohol + Hydroxyethyl Cellulose | 0.2 + 0.3 |

### Test Methods and Equipments

### Particle Size Test of Solid Binder Particles:

Referring to the test method of the standard "GB/T 19077-2016 Particle Size Distribution-Laser Diffraction Method", a laser particle size analyzer was used to test the particle size of the solid binder particles to obtain Dv50 data.

### Separator Thickness and Thickness Compression Ratio Test:

Referring to the thickness test method in 6.4.1 of the standard "GB/T 36363-2018 Polyolefin Separators for Lithium-Ion Batteries", a thickness gauge (model: German Mahr C1202) was used to test the thickness of a single-layer separator with a flat probe, the diameter of the probe φ=8 mm, and the test pressure was 0.25 Newton (N). The thickness of the single-layer separator in the original state (i.e., the separator before cold pressing) was tested by a Mahr thickness gauge, denoted as d₁; 10 layers of the original separator of 100 mm × 100 mm were cut and stacked, pressed under cold pressing conditions (25°C, 6 MPa, 40 s), then the thickness was measured and divided by 10 layers to obtain the thickness d₂ of the single-layer separator after compression. The thickness compression ratio of the separator was: (1-d₂/d₁) × 100%.

### Separator Air Permeability Test:

Referring to the air permeability test method in 6.5.4 of the standard "GB/T 36363-2018 Polyolefin Separators for Lithium-Ion Batteries", an air permeability tester (model: Wang Yan-style EG01-55-1MR) was used to test the time required for 100 mL of air to pass through 1 square inch of separator under a pressure of 1.22 kPa, which was the air permeability value. The smaller the air permeability value, the better the air permeability of the separator.

### Single-Sided Areal density Test of Dot-Coated Adhesive Layer:

The test was carried out with reference to the standard "GB/T 20220-2006 Plastics-Film and sheeting-Determination of average thickness of a sample, and average thickness and yield of a roll, by gravimetric techniques". A 100 cm² grammage sampler was used to cut 5 pieces of the substrate film and 5 pieces of the separator with the dot-coated adhesive layer respectively, weigh them to obtain the mass, then divide the mass by the sampling area to obtain the respective areal densitys. The difference between the two was the areal density of the coating amount of the dot-coated adhesive layer. The test was performed 5 times and the average value was taken.

### Coverage Rate Test of Dot-Coated Adhesive Layer on Substrate film:

A super-depth 3D microscope (model: Keyence VHX-7000) was used to identify and calculate the area of the adhesive dots on the surface of the separator with a magnification of 50X. In the target area (e.g., a rectangular area of 17 mm × 13 mm), the area of the adhesive dot was denoted as S1, and the area of the separator was denoted as S₂. Then the coverage rate of the dot-coated adhesive layer on the substrate film = (S₁/S₂) × 100%. Three target areas were randomly selected for testing and the average value was calculated.

### Average Height Test of First Annular Structure:

A super-depth 3D microscope (model: Keyence VHX-7000) was used to identify and measure the height value of the first annular structure of the adhesive dot on the surface of the original separator. Referring to Fig. 7, the height of the first annular structure of each adhesive dot was measured at 10 positions, 3 adhesive dots were randomly selected for testing to obtain 30 values, and the average value of these 30 values was calculated.

### Adhesion Strength Test between Separator and Positive Electrode Sheet:

The peel strength test of the separator with the adhesive layer and positive electrode sheet was carried out with reference to the standard "GB/T 2792-2014 Measurement of peel adhesion properties for adhesive tapes". After pressing, the sample size was cut to 20 mm × 100 mm, fixed in the fixture of a tensile machine, then the tensile machine peeled the separator and the positive electrode sheet along the 180° direction at a speed of 50 mm/min, the test distance was up to 80 mm, 5 strips were tested and the average value was taken, and the adhesion force was the average value of the peel strength. The pressing method for the separator and the positive electrode sheet was as follows: a 100 mm × 100 mm positive electrode sheet and separator were cut, naturally stacked, and then placed in a flat-plate press for pressing. The pressing temperature was room temperature at 25°C, the pressure holding time was 40 s, and the pressure per unit area was 4 to 7 MPa.

### Effective Adhesion Area Coverage Rate Test of Dot-Coated Adhesive Layer on Positive Electrode Sheet:

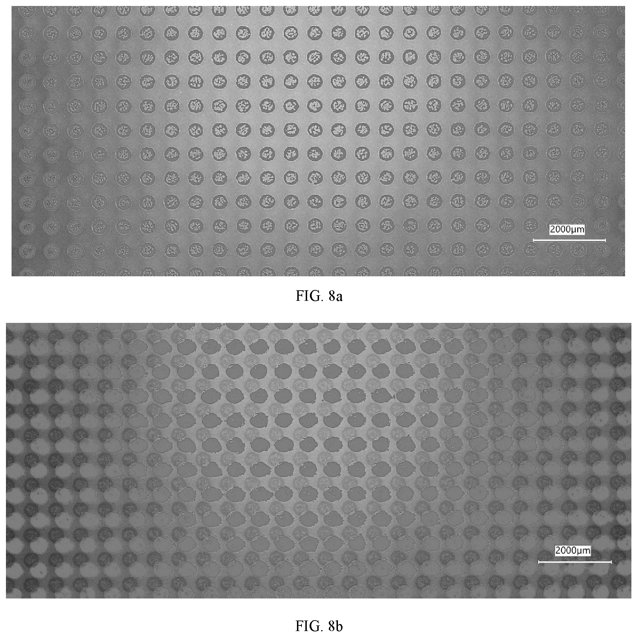

Referring to Fig. 8a or Fig. 8b, after the peel strength test of the separator-positive electrode sheet with the dot-coated adhesive layer, the percentage of the area of the raised annular pattern and the raised irregular pattern transferred from the dot-coated adhesive layer to the positive electrode sheet to the area of the positive electrode sheet was called the effective adhesion area coverage rate. In the target area (e.g., a rectangular area of 17 mm × 13 mm), a super-depth 3D microscope was used to identify and calculate the raised area (i.e., the area of the raised annular pattern and the raised irregular pattern) on the surface of the peeled positive electrode sheet with a magnification of 50X. Three target areas were randomly selected for testing and the average value was calculated.

### Average Width Ratio Test of First Annular Structure:

The radius of the adhesive dot on the surface of the original separator was R₁, which was equivalent to the distance between the outer edge of the first annular structure and the center of the adhesive dot; the radius of the non-raised part of the adhesive dot core was R₂, which was equivalent to the distance between the inner edge of the first annular structure and the center of the adhesive dot. The adhesive dot diameter d (i.e., 2R₁) was measured by SEM, 5 adhesive dots were randomly selected, 2R₁ and 2R₂ of each adhesive dot were measured 3 times respectively, then the average values of R₁ and R₂ were taken, and 1-R₂/R₁ was calculated accordingly.

### Average Width Ratio Test of Second Annular Structure:

After the positive electrode sheet and the PCS separator were bonded by room temperature dry pressing (cold pressing conditions: 25°C, 6 MPa, 40 s), they were peeled off. The radius of the annular imprint on the surface of the peeled positive electrode sheet was R₃, which was equivalent to the distance between the outer edge of the second annular structure and the center of the annular imprint; the radius of the blank area in the annular imprint was R₂, which was equivalent to the distance between the inner edge of the second annular structure and the center of the annular imprint. 5 adhesive dots were randomly selected, 2R₃ and 2R₄ of each adhesive dot were measured 3 times respectively, then the average values of R₃ and R₄ were taken, and 1-R₄/R₃ was calculated accordingly.

### Separator Ionic Conductivity Test:

Referring to the ionic conductivity test method in 6.6.2 of the standard "GB/T 36363-2018 Polyolefin Separators for Lithium-Ion Batteries", the ionic conductivity of the separator was tested and calculated.

### Lithium-Ion Battery Energy Efficiency Test:

Under the condition of 25°C, the lithium-ion battery was subjected to charge-discharge cycles by 0.5P charging and 0.5P discharging, where the charging cut-off voltage was 3.7V and the discharging cut-off voltage was 2.45V, until the capacity of the lithium-ion battery reached 60% of the initial capacity. Simultaneously, the constant current method was used to test the energy efficiency of the lithium-ion battery after 500 cycles. Energy efficiency = discharge energy of the 500th cycle/charge energy of the 500th cycle × 100%.

### Full Charge Negative Electrode Interface Condition Test:

According to the operating specifications, the fully charged lithium-ion battery was disassembled in a disassembly room with a humidity of ≤5% RH and a temperature of 25 ±3°C. The wrinkling condition of the negative electrode sheet interface was recorded by photography. If the number of wrinkles of the negative electrode sheet was 0, it was determined as no wrinkles; if the number of wrinkles of the negative electrode sheet was 1 ~ 3, it was determined as extremely slight wrinkles; if the number of wrinkles of the negative electrode sheet was 4 ~ 6, it was determined as slight wrinkles; if the number of wrinkles of the negative electrode sheet was 7 or more, it was determined as obvious wrinkles.

**Table 6: Performance Data of Example 1~Example 8 and Comparative Example 1**

| | Adhesion Strength between Separator and Positive Electrode Sheet (N/m) | Separator Ionic Conductivity (mS/cm) | Room Temperature Energy Efficiency (%) | Full Charge Negative Electrode Sheet Interface Condition |
|---|---|---|---|---|
| Example 1 | 4.2 | 1.4244 | 94.67 | No wrinkles |
| Example 2 | 4.5 | 1.4202 | 94.64 | No wrinkles |
| Example 3 | 6.3 | 1.2891 | 94.55 | No wrinkles |
| Example 4 | 6.8 | 1.2788 | 94.52 | No wrinkles |
| Example 5 | 5.3 | 1.4154 | 94.60 | No wrinkles |
| Example 6 | 6.4 | 1.3602 | 94.53 | No wrinkles |
| Example 7 | 7.3 | 1.3192 | 94.51 | No wrinkles |
| Example 8 | 7.6 | 1.3045 | 94.50 | No wrinkles |
| Comparative Example 1 | 0.5 | 0.9883 | 94.02 | Obvious wrinkles |
| Comparative Example 2 | 1.1 | 1.4272 | 94.69 | Slight wrinkles |
| Comparative Example 3 | 8.2 | 1.1872 | 94.21 | No wrinkles |

It can be seen from Example 1~Example 4 and Comparative Example 1 that the adhesion strength between the separator and the positive electrode sheet, the separator ionic conductivity, and the room temperature energy efficiency of Comparative Example 1 are low, and the negative electrode sheet has obvious wrinkles after full charging. This may be because the adhesive layer solution of Comparative Example 1 does not add the auxiliary agent of the present disclosure, making it difficult to form the first annular structure of the present disclosure, thus affecting the adhesion performance and air permeability of the separator, leading to a decrease in the energy efficiency of the lithium-ion battery and easier occurrence of wrinkles; while the separator of the present disclosure has higher adhesion strength with the positive electrode sheet, higher separator ionic conductivity, higher room temperature energy efficiency, and no wrinkles on the negative electrode sheet interface after full charging.

It can be seen from Example 1~Example 4 and Comparative Example 2~Comparative Example 3 that if the addition amount of the auxiliary agent is too small (e.g., Comparative Example 2), the area ratio of the first annular structure in the adhesive dot is too small, and the effective adhesion area between the first annular structure and the positive electrode sheet is small. Although the energy efficiency of the lithium-ion battery is high, the ability to resist electrode sheet wrinkles is weak, and slight wrinkles appear on the negative electrode sheet interface after full charging; if the addition amount of the auxiliary agent is too large (e.g., Comparative Example 3), the area ratio of the first annular structure in the adhesive dot is too large, and the effective adhesion area between the first annular structure and the positive electrode sheet is large. Although the ability to resist electrode sheet wrinkles is strong, there are no wrinkles on the negative electrode sheet interface after full charging, the energy efficiency of the lithium-ion battery is low.

The type of auxiliary agent usually also affects the performance of the separator. It can be seen from Example 2 and Example 5~Example 8 that by selecting the auxiliary agent of the present disclosure, it is conducive to obtaining a separator with good adhesion performance and air permeability, thereby being conducive to the improvement of the performance of the lithium-ion battery.

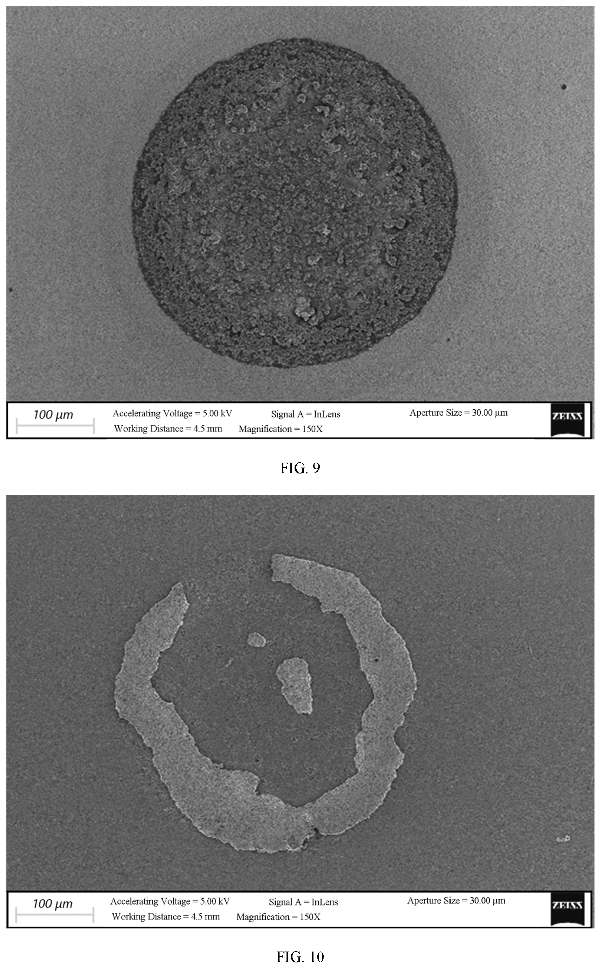

Fig. 9 is an SEM image of the adhesive dots in Example 4. It can be seen from Fig. 9 that the PVDF-HFP solid particle aggregates in the outer ring area of the original dot-coated adhesive dots in Example 4 are dense, while the PVDF-HFP solid particles in the core position of the dot-coated adhesive dots are relatively sparse, forming an obvious first annular structure, which has a morphology with a raised edge area and a depressed central area.

Fig. 10 is an SEM image of the annular imprints formed by the adhesive dots on the surface of the positive electrode sheet in Example 4. It can be seen from Fig. 10 that the adhesive dots remaining on the surface of the positive electrode sheet show a circular ring-like morphology, and there is no obvious adhesive dot residue in the core, indicating that the main part that plays the adhesion role is the outer ring area of the adhesive dots.

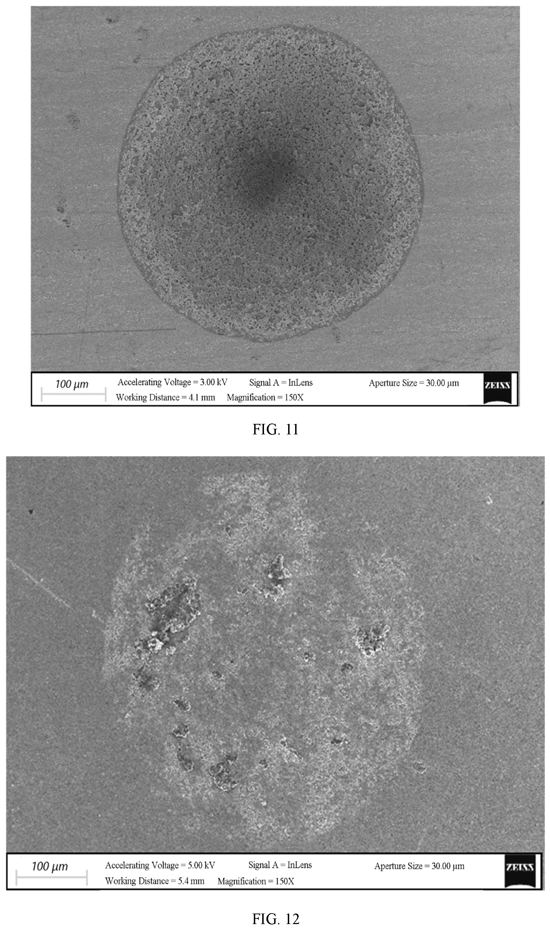

Fig. 11 is an SEM image of the adhesive dots in Comparative Example 1. It can be seen from Fig. 11 that the PVDF-HFP solid particle aggregates in the entire area of the original dot-coated adhesive dots in Comparative Example 1 are densely distributed, and the core and outer ring of the circular adhesive dots are relatively flat, without the morphology of a raised edge area and a depressed central area. This is because the surface tension of the conventional adhesive layer solution is small, the repulsion between PVDF-HFP solid particle aggregates decreases, and they are easy to coagulate and precipitate under the action of gravity during drying. Therefore, the surface of the adhesive dots is overall flat after drying.

Fig. 12 is an SEM image of the annular imprints formed by the adhesive dots on the surface of the positive electrode sheet in Comparative Example 1. It can be seen from Fig. 12 that the morphology of the adhesive dots remaining on the surface of the positive electrode sheet has no obvious circular ring structure, and the residues are irregular and small in area, indicating that the adhesion strength of the adhesive dots is small, and it is difficult to form a high-strength adhesion between the flat adhesive dot surface and the flat positive electrode sheet surface.

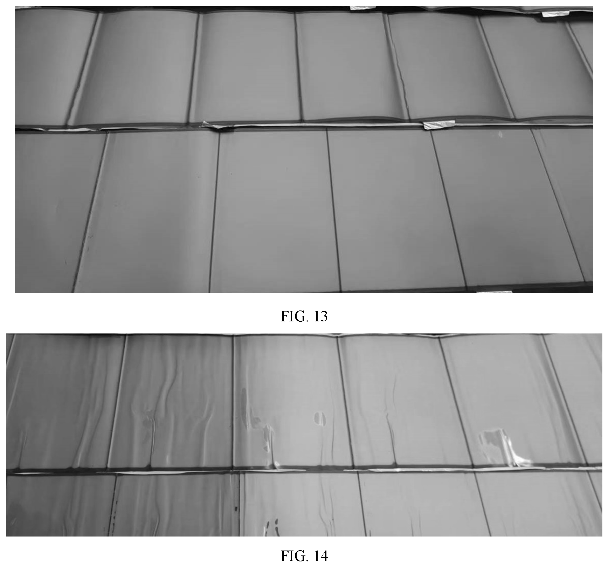

It can be seen from Fig. 13 and Fig. 14 that the negative electrode sheet interface of the lithium-ion battery in Example 4 of the present disclosure has no wrinkles after full charging, and the negative electrode sheet interface of the lithium-ion battery in Comparative Example 1 has obvious wrinkles after full charging.

The above is a detailed introduction to a separator, a battery comprising the same, an energy storage device, and an electric equipment disclosed in the present disclosure. In this paper, specific examples are used to illustrate the principle and implementation of the present disclosure. The description of the above examples is only used to help understand the technical solutions and core invention points of the embodiments of the present disclosure; at the same time, for those of ordinary skill in the art, according to the idea of the present disclosure, there will be changes in the specific implementation and application scope. In summary, the content of this specification should not be understood as a limitation to the present disclosure.

## Claims

1. A separator comprising a substrate film (10) and a dot-coated adhesive layer (20), the dot-coated adhesive layer (20) being disposed on at least one surface of the substrate film (10), wherein,
the dot-coated adhesive layer (20) comprises a plurality of adhesive dots (21) distributed in a dot matrix, and the adhesive dots (21) have a first annular structure (211), wherein a distance between an outer edge of the first annular structure (211) and a center of the adhesive dot (21) is R₁, and a distance between an inner edge of the first annular structure (211) and the center of the adhesive dot (21) is R₂, and 0.15≤1-R₂/R₁≤0.35;
wherein the dot-coated adhesive layer (20) comprises a polymer binder and an auxiliary agent, and the auxiliary agent comprises at least one of a water-soluble coupling agent and a phosphate-based auxiliary agent.

2. The separator according to claim 1, wherein a thickness compression ratio of the separator is K, and 5%≤K≤15%.

3. The separator according to claim 1 or 2, wherein an average height of the first annular structure (211) is H, and 5 µm≤H≤15 µm.

4. The separator according to any one of claims 1 to 3, wherein an air permeability increase of the separator is A, and 5 s/100cc≤A≤20 s/100cc.

5. The separator according to any one of claims 1 to 4, wherein an ionic conductivity of the separator is σ, and 1 mS/cm≤σ≤1.7 mS/cm.

6. The separator according to any one of claims 1 to 5, wherein an adhesion strength between the separator and the positive electrode sheet ranges from 3 N/m to 8 N/m.

7. The separator according to any one of claims 1 to 6, wherein the separator satisfies at least one of the following characteristics:
a) a diameter of the adhesive dot (21) is d, and 200 µm≤d≤800 µm;
b) along a length direction of the dot-coated adhesive layer (20), a distance between centers of adjacent adhesive dots (21) is D₁, and 200 µm≤D₁≤1200 µm;
c) along a width direction of the dot-coated adhesive layer (20), a distance between centers of adjacent adhesive dots (21) is D₂, and 200 µm≤D₂≤1200 µm;
d) a coverage rate of the dot-coated adhesive layer (20) on the substrate film (10) is C₁, and 5%≤C₁≤30%;
e) a single-sided areal density of the dot-coated adhesive layer (20) ranges from 0.3 g/m² to 0.8 g/m².

8. The separator according to any one of claims 1 to 7, wherein in an adhesive layer solution for forming the dot-coated adhesive layer (20), a mass percentage content of the auxiliary agent is a, and 0.1 wt%≤a≤1 wt%.

9. The separator according to any one of claims 1 to 8, wherein the water-soluble coupling agent comprises at least one of polyvinyl alcohol, hydroxyethyl cellulose, fatty acid ester, carboxylic acid ester, lactate ester, and cellulose ester;
the phosphate-based auxiliary agent comprises at least one of sodium tripolyphosphate, trisodium phosphate, sodium pyrophosphate, sodium phosphite, and sodium hexametaphosphate.

10. A battery comprising a positive electrode sheet, a negative electrode sheet, an electrolyte, and a separator, wherein the separator is located between the positive electrode sheet and the negative electrode sheet, and the separator is a separator according to any one of claims 1 to 9.

11. The battery according to claim 10, wherein a surface of the positive electrode sheet has a second annular structure (212), the second annular structure (212) is an annular imprint formed after the adhesive dot (21) is peeled off from the surface of the positive electrode sheet, a distance between an outer edge of the second annular structure (212) and a center of the annular imprint is R₃, a distance between an inner edge of the second annular structure (212) and the center of the annular imprint is R₄, and 0.2≤1-R₄/R₃≤0.7.

12. The battery according to claim 10 or 11, wherein an effective adhesion area coverage rate of a dot-coated adhesive layer (20) on the positive electrode sheet is C₂, and 2%≤C₂≤20%.

13. The battery according to claim 12, wherein 8%≤(C₂/C₁)×100%≤50%.

14. An energy storage device comprising a box body and at least one battery according to any one of claims 10 to 13, wherein the battery is accommodated in the box body.

15. An electric equipment comprising the energy storage device according to claim 14, wherein the energy storage device supplies power to the electric equipment.
